# EUROPÄISCHE PATENTSCHRIFT

(11) **EP 1 381 829 B1**
(45) Veröffentlichungstag und Bekanntmachung des Hinweises auf die Patenterteilung: **30.08.2006**
(21) Anmeldenummer: 02730056.5
(22) Anmeldetag: 23.03.2002
(51) Int. Cl.: G01D 18/00, G01D 3/02

(54) **VERFAHREN ZUM AUTOMATISCHEN ERKENNEN DER EMPFINDLICHKEIT VON SENSOREN**
METHOD FOR THE AUTOMATIC IDENTIFICATION OF SENSOR SENSITIVITY
PROCEDE POUR IDENTIFIER AUTOMATIQUEMENT LA SENSIBILITE DE DETECTEURS

(30) Priorität: 05.04.2001 DE 10117000
(43) Veröffentlichungstag der Anmeldung: 21.01.2004
(73) Patentinhaber: Priamus System Technologies AG, 8200 Schaffhausen (CH)
(72) Erfinder: FREY, Jürgen, 73230 Kirchheim/Teck (DE)
(74) Vertreter: Weiss, Peter
(86) Internationale Anmeldenummer: PCT/EP2002/003297
(87) Internationale Veröffentlichungsnummer: WO 2002/082023

(56) Entgegenhaltungen:
- EP-A- 0 965 827
- DE-A- 4 124 041
- US-A- 3 943 440
- US-A- 4 695 955
- US-A- 5 489 888

## Beschreibung

Die Erfindung betrifft ein Verfahren zum automatischen Erkennen der Empfindlichkeit von Sensoren, insbesondere von piezoelektrischen Sensoren mit individuellen Empfindlichkeiten, wobei Sensoren mit einer Empfindlichkeit um einen bestimmten Wert herum einer Sensorgruppe zugeordnet werden.

In vielen technischen Bereichen werden heute Sensoren zur Erfassung von Zuständen, Positionen usw. eingesetzt. Das nachfolgend beschriebene Verfahren bezieht sich vor allem auf Sensoren, die sich durch eine individuelle Empfindlichkeit unterscheiden. Nur bevorzugt bezieht sich das Verfahren auf piezoelektrische Sensoren, mit denen Druck, Kraft oder Beschleunigung ermittelt werden kann.

Beispielsweise werden derartige Sensoren in Spritzgiesswerkzeuge eingesetzt, um einen Werkzeuginnendruck zu ermitteln. Über den Werkzeuginnendruck kann dann beispielsweise der Grad der Füllung einer Kavität oder der Zeitpunkt der Umschaltung von Fülldruck auf Nachdruck bestimmt werden.

Ein grosses Problem beim Umgang mit derartigen Sensoren liegt in den individuellen Sensorempfindlichkeiten, die in pC/bar (picoCoulomb/bar) bei Druck oder pC/N (picoCoulomb/Newton) bei Kraft angegeben werden. Aus fabrikationstechnischen Gründen ist diese Empfindlichkeit für jeden Sensor unterschiedlich.

Aus der US 4,695,955 ist eine elektronische Vorrichtung bekannt, welche ein universelles Interface zwischen Sensoren und einem Prozesssystem der Signale anbietet, welche von den Sensoren ausgehen. Dabei sind die Identifikationselement zum automatischen Erkennen des Sensors gezeigt. Diese Identifikationselemente bestehen aus Resistoren.

Die US 3,943,440 befasst sich mit einem Verfahren der o. g. Art, allerdings nicht bezogen auf piezoelektrische Sensoren. In ihr werden aber Elemente zum Einstellen der Empfindlichkeit eines Messschaltkreises beschrieben, wobei ein kodierender Resistor mit dem Messschaltkreis durch einen einzigen Draht verbunden ist. Ein Strom wird durch diesen Resistor via dem Draht geführt. Die Spannung des Resistors wird gemessen und kodiert in binärer Form mittels einem A/D-Konverter um die Empfindlichkeit des Messschaltkreises einzustellen.

Aufgabe der vorliegenden Erfindung ist es, ein Verfahren der oben genannten Art zu entwickeln, welches die individuellen Empfindlichkeiten von Sensoren automatisch erkennt und die Messbereiche in einer geeigneten Einrichtung entsprechend bzw. optimal anpasst.

Zur Lösung dieser Aufgabe führt, dass den Sensoren der bestimmten Sensorgruppe mit einem vorbestimmten Empfindlichkeitsbereich Widerstände einer bestimmten Widerstandsgruppe mit Widerstandswerten um einen bestimmten Wert herum zugeordnet werden.

Beispielsweise existieren drei verschiedene Sensorgruppen mit drei verschiedenen Nominalempfindlichkeiten für einen bestimmten Anwendungsbereich:

| | |
|---|---|
| Gruppe 1 | 2,5 pC/bar |
| Gruppe 2 | 10 pC/bar |
| Gruppe 3 | 20 pC/bar |

Für die Gruppe 1 werden Widerstände mit 100 Ohm Schritten, für die Gruppe 2 Widerstände mit 1000 Ohm Schritten und für die Gruppe 3 Widerstände mit 10 000 Ohm Schritten eingesetzt. Auf diese Weise werden die Gruppen erkannt und voneinander unterschieden.

Bevorzugt erfolgt danach eine Feinklassierung bzw. Eingrenzung innerhalb der einzelnen Gruppen:
Gruppe 1

| | |
|---|---|
| 2,3 pC/bar | 100 Ohm |
| 2,4 pC/bar | 200 Ohm |
| 2,5 pC/bar | 300 Ohm |
| 2,6 pC/bar | 400 Ohm |
| 2,7 pC/bar | 500 Ohm |

Gruppe 2

| | |
|---|---|
| 9,8 pC/bar | 1000 Ohm |
| 9,9 pC/bar | 2000 Ohm |
| 10,0 pC/bar | 3000 Ohm |
| 10,1 pC/bar | 4000 Ohm |
| 10,2 pC/bar | 5000 Ohm |

Gruppe 3

| | |
|---|---|
| 19,8 pC/bar | 10 000 Ohm |
| 19,9 pC/bar | 20 000 Ohm |
| 20,0 pC/bar | 30 000 Ohm |
| 20,1 pC/bar | 40 000 Ohm |
| 20,2 pC/bar | 50 000 Ohm |

Der entprechende Sensor, der für einen bestimmten Anwendungsfall verwendet werden soll, wird nun bevorzugt in einen Ladungsverstärker ("Plug & Play") eingesteckt, über den die Sensorempfindlichkeit definiert wird. Der Verstärker stellt automatisch den optimalen Bereich ein.

Der effektiv skalierte Signalausgang für den Anwender wird über Steuer-Codes kommuniziert, eine Eingabe der Sensorempfindlichkeit durch den Anwender ist deshalb überflüssig.

Bevorzugt soll im Verstärker aber nicht nur die Empfindlichkeiten automatisch erkannt, sondern auch die optimalen Messbereiche automatisch eingestellt werden. Auf diese Weise ergibt sich immer und automatisch die bestmögliche Auflösung des Messsignals.

## Patentansprüche

1. Verfahren zum automatischen Erkennen der Empfindlichkeit von Sensoren,
**dadurch gekennzeichnet,**
**dass** dem Sensor ein Widerstand einer bestimmten Grösse zugeordnet wird, durch den der Sensor einer bestimmten Sensorgruppe mit einem vorbestimmten Empfindlichkeitsbereich zugeordnet wird.

2. Verfahren nach Anspruch 1, **dadurch gekennzeichnet, dass** der Sensor innerhalb der Sensorgruppe durch eine bestimmte Grösse seines Widerstandes eingegrenzt wird.

3. Verfahren nach Anspruch 1 oder 2, **dadurch gekennzeichnet, dass** der Sensor in einen Ladungsverstärker eingesteckt und durch diesen seine Empfindlichkeit definiert wird.

4. Verfahren nach Anspruch 3, **dadurch gekennzeichnet, dass** auch die optimalen Messbereiche im Verstärker automatisch eingestellt werden.

## Claims

1. Method of automatically detecting the sensitivity of sensors, **characterised in that** a resistor of a specific magnitude is associated with the sensor, through which resistor the sensor is associated with a specific sensor group having a predetermined sensitivity range.

2. Method according to claim 1, **characterised in that** the sensor is defined within the sensor group by a specific magnitude of its resistor.

3. Method according to claim 1 or 2, **characterised in that** the sensor is plugged into a charge amplifier, and its sensitivity is defined by said amplifier.

4. Method according to claim 3, **characterised in that** the optimum measuring ranges in the amplifier are also automatically set.

## Revendications

1. Procédé pour identifier automatiquement la sensibilité de détecteurs,
**caractérisé par le fait**
**qu'**au détecteur est associée une résistance d'une grandeur déterminée par laquelle le détecteur est associé à un groupe de détecteurs déterminé avec une plage de sensibilité prédéterminée.

2. Procédé selon la revendication 1, **caractérisé par le fait que** le groupe de détecteurs est délimité par une grandeur déterminée de sa résistance.

3. Procédé selon la revendication 1 ou 2, **caractérisé par le fait que** le détecteur est introduit dans un amplificateur de charge et que par ce dernier est définie sa sensibilité.

4. Procédé selon la revendication 3, **caractérisé par le fait que** les plages de mesure optimales sont également réglées automatiquement dans l'amplificateur.
